# EUROPÄISCHE PATENTSCHRIFT

(11) **EP 1 188 939 B1**
(45) Veröffentlichungstag und Bekanntmachung des Hinweises auf die Patenterteilung: **28.04.2004**
(21) Anmeldenummer: 01121428.5
(22) Anmeldetag: 07.09.2001
(51) Int. Cl.: F16B 37/04, E04B 9/18

(54) **Hammerkopfelement zur Befestigung in einer einen Schlitz aufweisenden Montageschiene**
Hammer-head element to be fixed in a sloted mounting bar
Element de tète de marteau pour être fixé dans un rail de montage comportant une fente

(30) Priorität: 19.09.2000 DE 10046198
(43) Veröffentlichungstag der Anmeldung: 20.03.2002
(73) Patentinhaber: fischerwerke Artur Fischer GmbH & Co. KG, 72178 Waldachtal (DE)
(72) Erfinder: Schulte, Helmut, 58807 Lüdenscheid (DE)

(56) Entgegenhaltungen:
- EP-A- 1 039 155
- DE-C- 19 704 902
- DE-U- 29 513 990
- US-A- 3 867 048

## Beschreibung

Die Erfindung betrifft ein Hammerkopfelement zur Befestigung in einer einen Schlitz aufweisenden Montageschiene mit den Merkmalen des Oberbegriffs des Anspruchs 1.

Der Anspruch 1 geht von der Druckschrift DE 295 13990 A als nächst kommenden Stand der Technik aus.

Das Problem des aus der DE 295 13990 A bekannten Hammerkopfelements besteht in dem großen Abstand des zu befestigenden Gegenstands von der Montageschiene, der durch das Hammerkopfelement bzw. die dabei verwendete Druckfeder verursacht wird. Häufig ist ein solcher Abstand störend oder macht eine zeitsparende Befestigung mit einer Montageschiene gänzlich unmöglich, beispielsweise bei der Befestigung von Rohren an einer niedrigen Decke oder in engen Versorgungsschächten.

Aufgabe der Erfindung ist es, das Hammerkopfelement im Zustand der Befestigung in seiner axialen Länge deutlich gegenüber der bekannten Druckfeder zu reduzieren und einen kompakterer Aufbau, der ein platzsparendes Befestigen erlaubt, zu erzielen. Gleichzeitig sollen Biegemomente, die ggf. durch Querkräfte des Befestigungsgegenstands auf die Montageschiene wirken, durch einen verkürzten Hebelarm reduziert werden.

Diese Aufgabe wird erfindungsgemäß durch die Merkmale des Anspruchs 1 gelöst. Das Spannelement des erfindungsgemäßen Hammerkopfelements weist eine Höhlung an einer dem Hammerkopf zugewandten Seite auf, in der das Klemmfederelement bei gegen die Montageschiene gespanntem Spannelement einliegt. Dies hat den Vorteil, dass das Spannelement das Klemmfederelement überdeckt, so dass das Klemmfederelement bei unverschiebbar an der Montageschiene festgespanntem Hammerkopfelement nicht sichtbar ist. Weiterer Vorteil der Höhlung des Spannelements des erfindungsgemäßen Hammerkopfelements ist, dass bei unverschieblich an der Montageschiene festgespanntem Hammerkopfelement das Spannelement selbst unmittelbar an der Montageschiene anliegt und die Klemmkraft ausübt. Die Klemmkraft wird dadurch insbesondere nicht über das zwischen dem Spannelement und der Montageschiene einliegende Klemmfederelement übertragen.

Als Hammerkopf weist eine Ausgestaltung der Erfindung eine Hammerkopfmutter auf, in die ein Gewindeschaft eingeschraubt oder einschraubbar ist. Bei einer anderen Ausgestaltung der Erfindung bildet ein Schraubenkopf (Hammerkopf) einer Hammerkopfschraube den Hammerkopf des erfindungsgemäßen Hammerkopfelements.

Bei einer Ausgestaltung der Erfindung weist das Spannelement eine Lochscheibe auf, die beispielweise nach Art einer Unterlegscheibe mit beispielsweise einer Spannmutter gegen die Montageschiene spannbar ist. Die Lochscheibe weist die Höhlung auf, in der das Klemmfederelement bei gegen die Montageschiene gespannter Lochscheibe einliegt. Die Höhlung kann beispielsweise als Ansenkung in einer ebenen Lochscheibe ausgebildet sein. Vorzugsweise weist die Lochscheibe zur Ausbildung der Höhlung eine Wölbung auf.

Eine andere Ausgestaltung der Erfindung sieht eine Mutter als Spannelement vor, die beispielsweise eine Ansenkung als Höhlung auf einer dem Hammerkopf zugewandten Seite aufweist. Diese Ausgestaltung der Erfindung hat den Vorteil, dass keine Lochscheibe zusätzlich zur Mutter notwendig ist.

Die Erfindung sieht ein Windungen aufweisendes Klemmfederelement, also beispielsweise eine Schraubenfeder, als Klemmfederelement vor. Ein Windungsdurchmesser ändert sich so, dass sich die Windungen des Klemmfederelements ineinander legen, wenn das Klemmfederelement axial verkürzt wird. Die ineinander liegenden Windungen des Klemmfederelements bilden eine oder auch mehrere aufeinander liegende Spiralen. Durch das Ineinanderlegen der Windungen beim axialen Verkürzen des Klemmfederelements lässt sich das Klemmfederelement in einer niedrigen Höhlung des Spannelements unterbringen. Das Klemmfederelement kann beispielsweise aus Federdraht mit einer einer Schraubenfeder ähnlichen Form hergestellt sein, wobei allerdings eine gedachte Hüllfläche der Windungen des Klemmfederelements von einer Zylinderform abweicht. Die gedachte Hüllfläche kann beispielsweise die Form eines Kegelstumpfs oder auch zwei wahlweise mit ihrer Grund- oder ihrer Stumpfseite aneinander gesetzter Kegelstümpfe aufweisen. Auch kann die gedachte Hüllfläche der Windungen des Klemmfederelements von einer Zylinderform abweichend nach außen (bauchig) oder nach innen gewölbt sein. Das Klemmfederelement kann als Druckfederelement oder als Zugfederelement ausgebildet sein. In letzterem Fall kann das Klemmfederelement auch als Spiralzugfeder, d. h. mit in unverformtem Zustand in einer Ebene ineinander liegenden Windungen ausgebildet sein, die bei elastischer Verformung des Klemmfederelements axial auseinander gezogen werden.

Die Erfindung wird nachfolgend anhand in der Zeichnung dargestellter Ausführungsbeispiele näher erläutert. Es zeigen:
- Figur 1: eine Montageschiene in perspektivischer Darstellung;
- Figur 2: ein erfindungsgemäßes Hammerkopfelement in Seitenansicht;
- Figur 3: das Hammerkopfelement aus Figur 2 in einer Stirnansicht gemäß Pfeil III in Figur 2;
- Figur 4: das Hammerkopfelement aus Figur 2 in montiertem Zustand; und
- Figur 5: ein zweites Ausführungsbeispiel eines erfindungsgemäßen Hammerkopfelements in perspektivischer Darstellung.

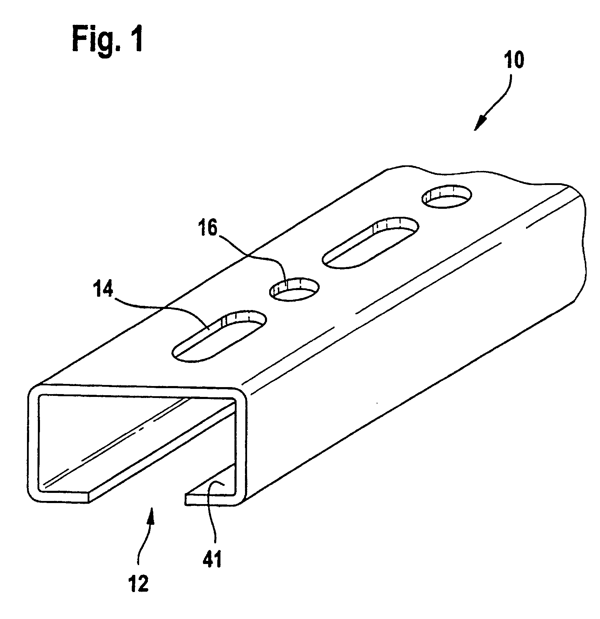

Die in Figur 1 dargestellte Montageschiene 10 ist an sich bekannt. Sie dient beispielsweise zur Anbringung einer nicht dargestellten, abgehängten Konstruktion an einer Decke. Die Montageschiene 10 weist ein Rechteckrohrprofil auf, das an einer Seite mit einem durchgehenden Schlitz 12 versehen ist. Auf einer gegenüberliegenden Seite sind Langlöcher 14 und Rundlöcher 16 zur Befestigung der Montageschiene 10 an beispielsweise einer Decke angebracht.

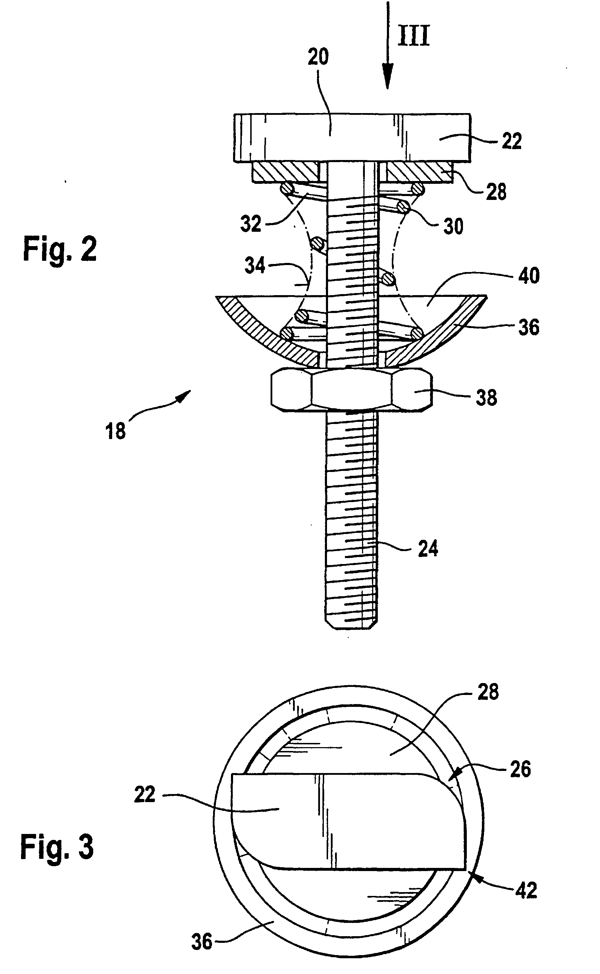

Das in Figur 2 dargestellte, erfindungsgemäße Hammerkopfelement 18 weist eine Hammerkopfschraube 20 auf, die einen Hammerkopf 22 und einen Gewindeschaft 24 umfasst. Der Hammerkopf 22 weist wie in Figur 3 zu sehen in Draufsicht die Form eines Rechtecks auf, wobei zwei einander diametral gegenüberliegende Ecken durch Rundungen 26 ersetzt sind. Eine Breite des Hammerkopfs 22 ist kleiner als eine Breite des Schlitzes 12 der Montageschiene 10. Eine Länge des Hammerkopfs 22 ist größer als die Breite des Schlitzes 12 und kürzer als eine Innenbreite der Montageschiene 10.

Auf den Gewindeschaft 24 der Hammerkopfschraube 20 ist zunächst eine Unterlegscheibe 28 gefolgt von einem Klemmfederelement 30 aufgesetzt. Das Klemmfederelement 30 ist ein Druckfedernelement, es weist Windungen 32 ähnlich einer Schraubenfeder auf. Das Klemmfederelement 30 ist aus Federdraht gewickelt. Abweichend von einer Schraubenfeder weisen die Windungen 32 des Klemmfederelements 30 einen sich ändernden Windungsdurchmesser auf. Eine gedachte, in Figur 2 mit Strichpunktlinien angedeutete Hüllfläche 34 der Windungen 32 des Klemmfederelements 30 ist im Vergleich zu einer gedachten, nicht dargestellten Zylinderfläche nach innen gewölbt. Die Hüllfläche 34 bildet beispielsweise ein einschaliges Hyperboloid. Abweichend vom dargestellten Ausführungsbeispiel kann auch der Windungsdurchmesser im Mittelbereich des Klemmfederelements 30 größer als an dessen Enden sein oder der Windungsdurchmesser nimmt axial in einer Richtung ausschließlich zu oder ab. Zweck der sich ändernden Windungsdurchmesser ist, dass sich die Windungen 32 beim Zusammendrücken des Klemmfederelements 30 ineinander legen, so dass sich das Klemmfederelement 30 auf eine Drahtstärke oder doppelte Drahtstärke des Federdrahts, aus dem es gewickelt ist, zusammendrücken lässt. Das dargestellte Klemmfederelement 30 lässt sich, da sein Windungsdurchmesser von einem Ende zur Mitte hin abnimmt und anschließend zum anderen Ende hin wieder zunimmt, elastisch zu zwei aufeinander liegenden Spiralen zusammendrücken, weist also in zusammengedrücktem Zustand maximal die doppelte Dicke seiner Drahtstärke auf.

Anschließend an das Klemmfederelement 30 ist eine gewölbte Lochscheibe 36 auf den Gewindeschaft 24 der Hammerkopfschraube 20 aufgesetzt und daran anschließend eine Mutter 38 auf den Gewindeschaft 24 aufgeschraubt. Die gewölbte Lochscheibe 36 und die Mutter 38 bilden ein Spannelement 36, 38 des erfindungsgemäßen Hammerkopfelements 18. Eine konkave Seite der gewölbten Lochscheibe 36 bildet eine Höhlung 40, sie ist dem Hammerkopf 22 zugewandt.

Zur Befestigung des Hammerkopfelements 18 in der Montageschiene 10 wird der Hammerkopf 22 in Längsrichtung der Montageschiene 10 und ihres Schlitzes 12 ausgerichtet durch den Schlitz 12 hindurch in die Montageschiene 10 eingeführt. Anschließend wird die Hammerkopfschraube 20 eine Vierteldrehung gedreht und dadurch der Hammerkopf 22 in der Montageschienen 10 quer gestellt. Der Hammerkopf 22 gelangt durch die Vierteldrehung in Hintergriff mit Wandungen 41 der Montageschiene 10 seitlich des Schlitzes 12. Die Vierteldrehung erfolgt so, dass die Rundungen 26 des Hammkopfes 22 sich in Drehrichtung vorn befinden. Die Rundungen 26 ermöglichen die Vierteldrehung des Hammerkopfs 22 in der Montageschiene 10. Ecken 42 des Hammerkopfs 22 (Figur 3) stoßen bei einem eventuellen Weiterdrehen der Hammerkopfschraube 20 gegen Innenseiten der Montageschiene 10 und begrenzen dadurch den möglichen Drehwinkel der Hammerkopfschraube 20 so, dass die gewünschte Querstellung des Hammerkopfs 22 in der Montageschiene 10 erreichbar, der Hammerkopf 22 jedoch nicht wesentlich über die Querstellung hinaus drehbar ist.

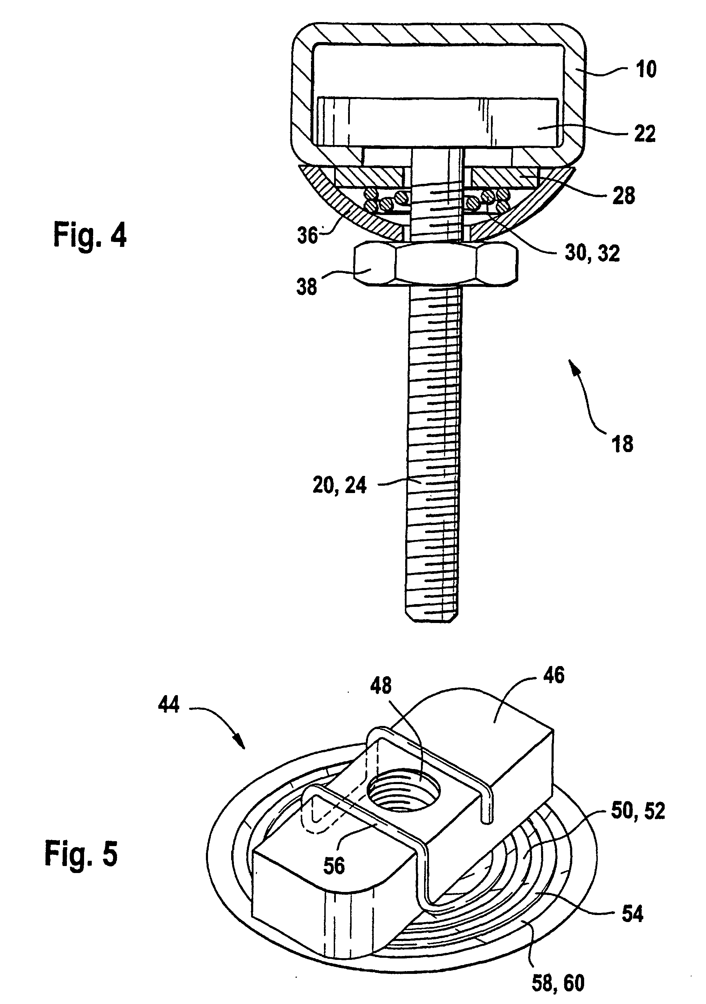

Das Klemmfederelement 30 drückt die Unterlegscheibe 28 von außen gegen die Montageschiene 10 und übt dadurch eine Klemmkraft aus. Diese Klemmkraft verhindert ein unbeabsichtigtes und selbsttätiges Verschieben des erfindungsgemäßen Hammerkopfelements 18. Die vom Klemmfederelement 30 ausgeübte Klemmkraft reicht aus, um das Hammerkopfelement 18 auch bei vertikal angeordneter Montageschiene 10 zuverlässig gegen ein Verschieben durch Schwerkraft zu halten. Die vom Klemmfederelement 30 ausgeübte Klemmkraft ist so gewählt, dass sich das Hammerkopfelement 18 problemlos von Hand in Längsrichtung der Montageschiene 10 an eine gewünschte Stelle verschieben lässt. Um das Hammerkopfelement 18 unverschieblich an der Montageschiene 10 festzulegen, wird die Mutter 38 auf dem Gewindeschaft 24 der Hammerkopfschraube 20 in Richtung des Hammerkopfs 22 geschraubt und festgezogen. Die Mutter 38 spannt die gewölbte Lochscheibe 36 von außen gegen die Montageschiene 10, so dass das Hammerkopfelement 18 unverschieblich an der Montageschiene 10 befestigt ist. Figur 4 zeigt den unverschieblich an der Montageschiene 10 festgespannten Zustand des erfindungsgemäßen Hammerkopfelements 18.

Wie In Figur 4 erkennbar, liegt die gewölbte Lochscheibe 36 unmittelbar an der Montageschiene 10 an, die Unterlegscheibe 28 und das Klemmfederelement 30 liegen in der die Höhlung 40 bildenden, konkaven Seite der gewölbten Lochscheibe 36 ein, die Unterlegscheibe 28 und das Klemmfederelement 30 sind vollständig in der Höhlung 40 der gewölbten Lochscheibe 36 aufgenommen. Die Windungen 32 des Klemmfederelements 30 haben sich aufgrund des axialen Zusammendrückens des Klemmfederelements 30 mit der Mutter 38 ineinander gelegt, im festgespannten, in Figur 4 dargestellten Zustand bilden die Windungen 32 des Klemmfederelements 30 zwei flach aufeinander liegende Spiralen.

Grundsätzlich kann die Höhlung auch als Ansenkung an einer dem Hammerkopf 22 zugewandten Stirnseite der Mutter 38 vorgesehen sein, vorausgesetzt ein Quermesser der Mutter 38 ist ausreichend groß. In diesem Fall entfällt die gewölbte Lochscheibe 36.

Am Gewindeschaft 24 der Hammerkopfschraube 20 des erfindungsgemäßen Hammerkopfelements 18 kann beispielsweise mittels einer nicht dargestellten Rohrschelle ein Rohr befestigt werden. Die Befestigung des Rohrs am Hammerkopfelement 18 kann erfolgen, bevor die Mutter 38 festgezogen worden ist, so dass sich das Hammerkopfelement 18 nach Befestigung des nicht dargestellten Rohrs durch Verschieben in Längsrichtung der Montageschiene 10 ausrichten und erst danach durch Festziehen der Mutter 38 unverschieblich an der Montageschiene 10 festlegen lässt.

Das in Figur 5 dargestellte, erfindungsgemäße Hammerkopfelement 44 weist eine Hammerkopfmutter 46 als Hammerkopf auf. Die Hammerkopfmutter 46 weist die Form des Hammerkopfs 22 der in Figuren 2 bis 4 dargestellten Hammerkopfschraube 20 auf, wobei die Hammerkopfmutter 46 ein Gewindeloch 48 zum Einschrauben eines nicht dargestellten Gewindeschafts aufweist. An der Hammerkopfmutter 46 ist ein Klemmfederelement 50 befestigt, das als Zugfederelement ausgebildet ist. Das Klemmfederelement 50 ist als Spiralfeder ausgebildet, seine Windungen 52 weisen unterschiedliche Durchmesser auf und liegen bei unverformtem Klemmfederelement 50 in einer Ebene ineinander. Eine äußere Windung 54 des Klemmfederelements 50 weist einen Durchmesser auf, der größer als die Breite des Schlitzes 12 der Montageschiene 10 ist. Die Durchmesser der übrigen Windungen 52 des Klemmfederelements 50 sind kleiner als die Breite des Schlitzes 12 der Montageschiene 10. Dadurch kommt die äußere Windung 54 des Klemmfederelements 50 auf einer Außenseite der Montageschiene 10 zur Anlage, wenn die Hammerkopfmutter 46 in die Montageschiene 10 eingeführt wird. Eine separate Unterlegscheibe kann dadurch entfallen.

Zur Befestigung des Klemmfederelements 50 an der Hammerkopfmutter 46 ist das Klemmfederelement 50 zu einem die Hammerkopfmutter 46 klemmend übergreifenden Bügel 56 im Anschluss an eine innere Windung geformt.

Zur Befestigung des in Figur 5 dargestellten, erfindungsgemäßen Hammerkopfelements 44 wird dessen Hammerkopfmutter 46 in Längsrichtung der Montageschiene 10 ausgerichtet durch deren Schlitz 12 in die Montageschiene 10 eingebracht und anschließend durch eine Vierteldrehung in der Montageschiene 10 quergestellt, so dass die Hammerkopfmutter 46 die Wandungen 41 der Montageschiene 10 seitlich des Schlitzes 12 hintergreift. Zum Einsetzen der Hammerkopfmutter 46 kann ein nicht dargestellter Gewindeschaft in das Gewindeloch 48 der Hammerkopfmutter 46 eingeschraubt werden. Das Klemmfederelement 50, dessen äußere Windung 54 außen an der Montageschiene 10 anliegt, zieht die in der Montageschiene 10 quer gestellte Hammerkopfmutter 46 von innen gegen die Wandungen 41 der Montageschiene 10 seitlich des Schlitzes 12.

Auf diese Weise übt das Klemmfederelement 50 eine Klemmkraft aus, die das Hammerkopfelement 46 gegen unbeabsichtigtes Verschieben an der Montageschiene 10 festklemmt. Die Klemmkraft des Klemmfederelements 50 lässt sich von Hand überwinden und dadurch das Hammerkopfelement 46 in Längsrichtung der Montageschiene 10 verschieben.

Wie das Hammerkopfelement 18 aus Figuren 2 bis 4 weist das Hammerkopfelement 44 aus Figur 5 eine gewölbte Lochscheibe 58 auf, deren konkave Seite der Hammerkopfmutter 46 zugewandt ist. Die konkave Seite der gewölbten Lochscheibe 58 bildet eine Höhlung 60, in der das Klemmfederelement 50 vollständig einliegt. Die gewölbte Lochscheibe 58 kann mit der äußeren Windung 54 des Klemmfederelements 50 verbunden oder auch lose sein. Zum unverschieblichen Festlegen des in die Montageschiene 10 eingesetzten Hammerkopfelements 44 wird ein nicht dargestellter Gewindeschaft durch die gewölbte Lochscheibe 58 hindurch in das Gewindeloch 48 der Hammerkopfmutter 46 eingeschraubt, sofern der Gewindeschaft nicht bereits zum Einsetzen der Hammerkopfmutter 46 in die Montageschiene 10 in das Gewindeloch 48 eingeschraubt worden ist. Mit einer nicht dargestellten, auf den Gewindeschaft aufgeschraubten Mutter wird über die gewölbte Lochscheibe 58 das Hammerkopfelement 44 unverschieblich an der Montageschiene 10 festgespannt. An dem nicht dargestellten, in das Gewindeloch 48 eingeschraubten Gewindeschaft lässt sich wie an dem Gewindeschaft 24 der in Figuren 2 bis 4 dargestellten Hammerkopfschraube 20 beispielsweise eine Rohrschelle befestigen.

## Patentansprüche

1. Hammerkopfelement (18, 44) zur Befestigung in einer einen Schlitz (12) aufweisenden Montageschiene (10), mit in einem in die Montageschiene einsetzbaren Hammerkopf (22, 46), mit einem Klemmfederelement (30; 50), das bei in die Montageschiene (10) eingesetztem Hammerkopf (22, 46) eine Klemmkraft auf die Montageschiene (10) ausübt, und mit einem Spannelement, (36, 38; 58) mit dem das Hammerkopfelement unverschieblich festspannbar ist, und wobei das Spannelement (36, 38; 58) eine Höhlung (40; 60) an einer dem Hammerkopf (22; 46) zugewandten Seite aufweist, in der das Klemmfederelement (30; 50) bei gegen die Montageschiene (10) gespanntem Spannelement (36, 38; 58) einliegt, **dadurch gekennzeichnet, dass** das Klemmfederelement (30; 50) Windungen (32; 52, 54) mit sich änderndem Windungsdurchmesser aufweist, so dass sich bei axialem Verkürzen des Klemmfederelements (30; 50) dessen Windungen (32; 52, 54) ineinander legen.

2. Hammerkopfelement nach Anspruch 1 **dadurch gekennzeichnet, dass** das Hammerkopfelement (44) eine Hammerkopfmutter (46) als Hammerkopf aufweist.

3. Hammerkopfelement nach Anspruch 1, **dadurch gekennzeichnet, dass** das Hammerkopfelement (18) eine Hammerkopfschraube (20) aufweist.

4. Hammerkopfelement nach Anspruch 1, **dadurch gekennzeichnet, dass** das Spannelement (36, 38; 58) eine Lochscheibe (36; 58) aufweist, die bei in die Montageschiene (10) eingesetztem Hammerkopf (22; 46) gegen die Montageschiene (10) spannbar ist und die die Höhlung (40; 60) aufweist, in der das Klemmfederelement (30; 50) einliegt, wenn die Lochscheibe (36; 58) gegen die Montageschiene (10) gespannt ist.

5. Hammerkopfelement nach Anspruch 4, **dadurch gekennzeichnet, dass** die Lochscheibe (36; 58) zur Ausbildung der Höhlung (40; 60) gewölbt ist.

6. Hammerkopfelement nach Anspruch 1, **dadurch gekennzeichnet, dass** das Klemmfederelement (30) ein Druckfederelement ist.

7. Hammerkopfelement nach Anspruch 1, **dadurch gekennzeichnet, dass** das Klemmfederelement (50) ein Zugfederelement ist.

## Claims

1. Hammerhead element (18, 44) for mounting in a mounting rail (10) having a slot (12), having a hammerhead (22, 46) insertable into the mounting rail, having a damping spring element (30; 50) which exerts a clamping force on the mounting rail (10) when the hammerhead (22, 46) is inserted in the mounting rail (10), and having a tensioning element (36, 38; 58) with which the hammerhead element can be immovably fixed, wherein the tensioning element (36, 38; 58) has on a side facing the hammerhead (22; 46) a cavity (40; 60) within which the clamping spring element (30; 50) lies when the tensioning element (36, 38; 58) is tensioned against the mounting rail (10), **characterised in that** the clamping spring element (30; 50) has turns (32; 52, 54) of varying winding diameter, so that its turns (32; 52, 54) come to lie one inside the other when the clamping spring element (30; 50) is made axially shorter.

2. Hammerhead element according to claim 1, **characterised in that** the hammerhead element (44) has a hammerhead nut (46) as hammerhead.

3. Hammerhead element according to claim 1, **characterised in that** the hammerhead element (18) has a hammerhead screw (20).

4. Hammerhead element according to claim 1, **characterised in that** the tensioning element (36, 38; 58) has an apertured disc (36; 58) which can be tensioned against the mounting rail (10) when the hammerhead (22; 46) is inserted in the mounting rail (10) and which has the cavity (40; 60) within which the clamping spring element (30; 50) lies when the apertured disc (36; 58) is tensioned against the mounting rail (10).

5. Hammerhead element according to claim 4, **characterised in that** the apertured disc (36; 58) is domed to create the cavity (40; 60).

6. Hammerhead element according to claim 1, **characterised in that** the clamping spring element (30) is a compression spring element.

7. Hammerhead element according to claim 1, **characterised in that** the clamping spring element (50) is a tension spring element.

## Revendications

1. Elément de tête de marteau (18, 44) pour être fixé dans un rail de montage (10) présentant une fente (12), avec une tête de marteau (22, 46) pouvant être placée dans le rail de montage, avec un élément de ressort de friction (30 ; 50), lequel exerce sur le rail de montage (10) un effort de serrage pour la tête de marteau (22, 46) placée dans le rail de montage (10), et avec un élément de tension (36, 38 ; 58) avec lequel l'élément de tête de marteau doit pouvoir être fixé de façon intangible et moyennant quoi l'élément de tension (36, 38 ; 58) présente un creux (40 ; 60) au niveau d'un des côtés opposés à la tête de marteau (22 ; 46), dans lequel l'élément de ressort de friction (30 ; 50) se trouve pour un élément de tension (36, 38 ; 58) tendu par rapport au rail de montage (10), **caractérisé en ce que** l'élément de ressort de friction (30 ; 50) présente des enroulements (32 ; 52, 54) avec un diamètre d'enroulement se modifiant, de sorte que pour une réduction axiale de l'élément de tête de marteau (30 ; 50) ses creux (32 ; 52, 54) sont situés les uns dans les autres.

2. Elément de tête de marteau selon la revendication 1, **caractérisé en ce que** l'élément de tête de marteau (44) présente un écrou de tête de marteau (46) comme tête de marteau.

3. Elément de tête de marteau selon la revendication 1, **caractérisé en ce que** l'élément de tête de marteau (18) présente une vis de tête de marteau (20).

4. Elément de tête de marteau selon la revendication 1, **caractérisé en ce que** l'élément de tension (36, 38 ; 58) présente un disque à trous (36 ; 58), lequel doit pouvoir être tendu par rapport au rail de montage (10) pour la tête de marteau (22 ; 46) placée dans le rail de montage (10) et lequel présente le creux (40 ; 60) dans lequel l'élément de ressort à friction (30 ; 50) est placé lorsque le disque à trous (36 ; 58) est tendu par rapport au rail de montage (10).

5. Elément de tête de marteau selon la revendication 4, **caractérisé en ce que** le disque à trous (36 ; 58) est voûté pour former le creux (40 ; 60).

6. Elément de tête de marteau selon la revendication 1, **caractérisé en ce que** l'élément de ressort de friction (30) est un élément de ressort de pression.

7. Elément de tête de marteau selon la revendication 1, **caractérisé en ce que** l'élément de ressort de friction (50) est un élément de ressort de traction.
